# EUROPEAN PATENT APPLICATION

(11) **EP 3 193 104 A1**
(43) Date of publication of application: **19.07.2017**
(21) Application number: 15840042.4
(22) Date of filing: 28.08.2015
(51) Int. Cl.: F25B 27/00, F25D 11/00

(54) **REFRIGERATING DEVICE AND CONTAINER REFRIGERATING SYSTEM**

(30) Priority: 09.09.2014 JP 2014183588
(71) Applicant: Denso Corporation, Kariya-shi, Aichi 448-8661 (JP)
(72) Inventor: MIZUMA, Ikuo, Kariya-city Aichi 448-8661 (JP)
(74) Representative: Rings, Rolf
(86) International application number: PCT/JP2015/004368
(87) International publication number: WO 2016/038838

(57) **Abstract**

A refrigeration device cools an interior of a container (100). The refrigeration device has an inverter device (24), an electric compressor (12), a condenser (13), an evaporator (15), a condenser fan (16), an evaporator fan (17), and a controller (30). An AC output from a power generator (22) driven by an engine (21) is supplied to the inverter device. A refrigerant discharge amount of the electric compressor is controlled by the inverter device. The refrigerant from the electric compressor flows in the condenser, and the condenser causes the refrigerant to radiate heat to outside air outside the container. The refrigerant from the condenser flows in the evaporator, and the evaporator cools the interior of the container. The condenser fan is driven by a DC output from a DC power supply device (230) and blows air to the condenser. The evaporator fan is driven by the DC output from the DC power supply device and blows air to the evaporator. The controller controls at least the electric compressor, the inverter device, and the engine.

## Description

### CROSS REFERENCE TO RELATED APPLICATION

This application is based on Japanese Patent Application No. 2014-183588 filed on September 9, 2014, the disclosure of which is incorporated herein by reference.

### TECHNICAL FIELD

The present disclosure relates to a refrigeration device that cools an interior of a container and a container refrigeration system that has the refrigeration device and a power generator.

### BACKGROUND ART

A trailer having a container refrigeration system, in which the system uses electric power generated by a power generator to drive a refrigeration device, has been in practical use. The refrigeration device of the trailer does not include an inverter but includes an electric compressor driven by use of a three-phase induction motor. A blower such as a condenser fan motor in the refrigeration device is also driven by the same three-phase output. However, in this refrigeration device, the electric compressor and the blower can be driven only by an AC power supply of 50 Hz or 60 Hz according to a rating of the three-phase motor.

Therefore, to supply electric power to the refrigeration device, it is necessary to supply the electric power at frequency of 50 Hz to 60 Hz. Accordingly, a speed of an engine for the power generator is also restricted. In other words, the engine speed is restricted to about 1500 rpm to 1800 rpm when a three-phase four-pole motor is used for the electric compressor.

In this case, the engine output cannot be reduced in a case where a lower limit of the engine speed is 1500 rpm even when an engine output is desirably further reduced because of a low refrigeration load. Therefore, fuel efficiency of the engine may deteriorate.

In Patent Literature 1, an engine speed can be controlled widely according to a refrigeration load by providing an inverter for supplying variable frequency AC to an entire refrigeration device. Furthermore, Patent Literature 2 discloses a motor driving unit that drives a DC brushless motor by using an inverter device for driving the motor and a refrigeration cycle device.

### PRIOR ART LITERATURES

### PATENT LITERATURE

Patent Literature 1: JP 2012-197988 A
Patent Literature 2: JP 2013-62934 A

### SUMMARY OF INVENTION

The above-described refrigeration cycle device of Patent Literature 1 has an engine for generating electricity, a converter, the inverter, and a controller. The converter converts an AC output generated by the power generator into a DC output. The inverter converts the DC output into the AC output and supplies the AC output to the entire refrigeration device. The controller controls the speed of the engine for generating electricity based on magnitude of the refrigeration load on the refrigeration device.

However, when the inverter reduces a rotation speed of an electric compressor, a rotation speed of an evaporator fan motor for circulating inside air in a container is reduced as well. Therefore, especially in a North American trailer as long as 53 feet, a short circuit of a flow of inside air occurs, which causes serious stagnation of the inside air.

With the above-described problem in view, an object of the present disclosure is to provide a refrigeration device having an electric refrigerator capable of preventing stagnation of inside air in a container even when a rotation speed of an electric compressor is reduced, and to provide a refrigeration system for container including the refrigeration device and an electricity generating unit.

A refrigeration device of the present disclosure cools an interior of a container (100). The refrigeration device has an inverter device used for driving a motor, an electric compressor, a condenser, an evaporator, a condenser fan, an evaporator fan, and a controller. An AC output from a power generator driven by an engine is supplied to the inverter device. A refrigerant discharge amount of the electric compressor is controlled by the inverter device. The refrigerant from the electric compressor flows in the condenser. The condenser causes the refrigerant to radiate heat to outside air outside the container. The refrigerant from the condenser flows in the evaporator. The evaporator cools the interior of the container. The condenser fan is driven by a DC output from a DC power supply device and blows air to the condenser. The evaporator fan is driven by the DC output from the DC power supply device and blows air to the evaporator. The controller controls at least the electric compressor, the inverter device, and the engine.

The refrigeration device of the present disclosure has the electric compressor in which a discharge amount of refrigerant is controlled by the inverter device to which the AC output from the power generator is supplied. Therefore, a rotation speed of the electric compressor can be changed regardless of a rotation speed of the engine. Accordingly, the rotation speed of the engine can be reduced, and thereby fuel consumption can be reduced, even when a refrigeration load is small. The DC power supply that is different from the AC output supplied from the power generator is supplied. Accordingly, the condenser fan and the evaporator fan can be operated regardless of frequency and voltage of the output from the power generator.

A container refrigeration system of the present disclosure has a refrigeration device, which cools an interior of a container, and an electricity generating unit, which supplies electric power to the refrigeration device.

The electricity generating unit has an engine, a power generator, and a DC power supply device. The power generator is driven by the engine to output an AC output. The DC power supply device converts power of the engine into electric power to generate a DC output.

The refrigeration device has an inverter device used for driving a motor, an electric compressor, a condenser, an evaporator, a condenser fan, an evaporator fan, and a controller. The AC output from the power generator is supplied to the inverter device. A refrigerant discharge amount of the electric compressor is controlled by the inverter device. The refrigerant from the electric compressor flows in the condenser. The condenser causes the refrigerant to radiate heat to outside air outside the container. The refrigerant from the condenser flows in the evaporator. The evaporator cools the interior of the container. The condenser fan is driven by the DC output from the DC power supply device and blows air to the condenser. The evaporator fan is driven by the DC output from the DC power supply device and blows air to the evaporator. The controller controls at least the electric compressor, the inverter device, and the engine.

The container refrigeration system in the present disclosure includes the electric compressor in which a discharge amount of refrigerant is controlled by the inverter device to which the AC output from the power generator is supplied. Therefore, a rotation speed of the electric compressor can be changed in a wide range regardless of a rotation speed of the engine. Consequently, even when a refrigeration load is small, it is possible to reduce the rotation speed of the engine to reduce fuel consumption. The DC power supply that is different from the AC output supplied from the power generator is provided. Thus, the condenser fan and the evaporator fan can be operated regardless of frequency and voltage of the output from the power generator.

### BRIEF DESCRIPTION OF DRAWINGS

The above and other objects, features and advantages of the present disclosure will become more apparent from the following detailed description made with reference to the accompanying drawings.
FIG. 1 is an overall configuration diagram illustrating a container refrigeration system according to a first embodiment.
FIG. 2 is an outline view illustrating a vehicle in which the container refrigeration system is mounted, according to the first embodiment.
FIG. 3 is a diagram illustrating a refrigeration cycle and showing a flow of refrigerant in a refrigeration device according to the first embodiment.
FIG. 4 is a table explaining kinds of user settings and restrictions on an engine speed in each of the settings according to the first embodiment.
FIG. 5 is a schematic diagram illustrating a control panel according to the first embodiment.
FIG. 6 is a control chart illustrating a relationship between temperature control of the container refrigeration system and the engine speed according to the first embodiment.
FIG. 7 is an overall configuration diagram illustrating a container refrigeration system according to a second embodiment.

### DESCRIPTION OF EMBODIMENTS

Embodiments of the present disclosure will be described hereinafter referring to drawings. In the embodiments, a part that corresponds to or equivalents to a matter described in a preceding embodiment may be assigned with the same reference number, and descriptions of the part may be omitted. When only a part of a configuration is described in an embodiment, parts described in preceding embodiments may be applied to the other parts of the configuration.

The parts may be combined even if it is not explicitly described that the parts can be combined. The embodiments may be partially combined even if it is not explicitly described that the embodiments can be combined, provided there is no harm in the combination.

### (First Embodiment)

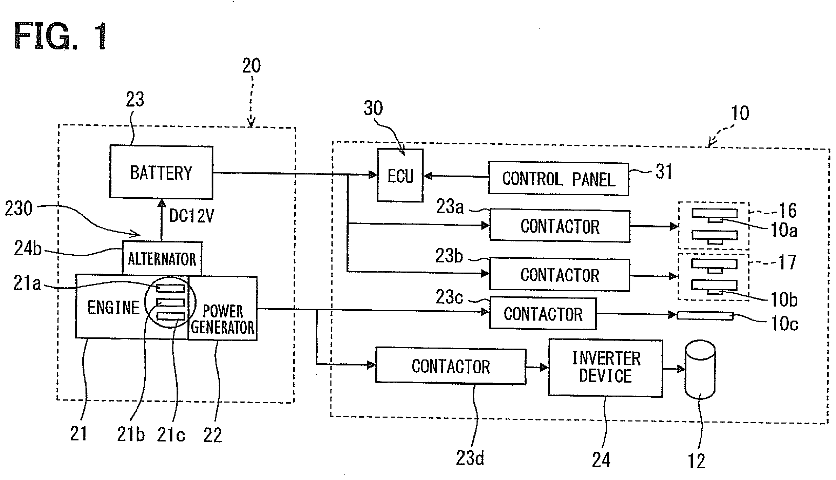

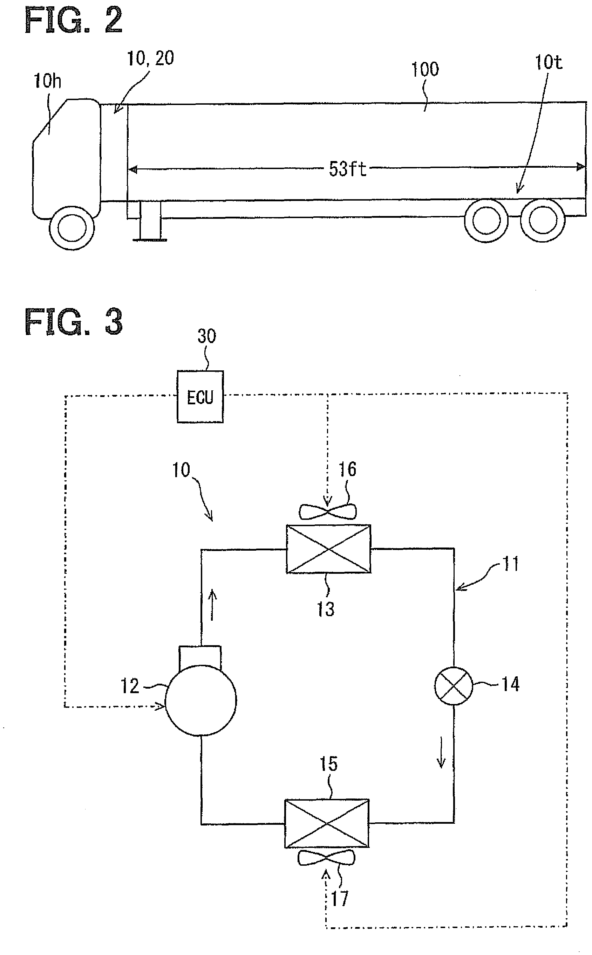

A first embodiment of the present disclosure will be described below by using FIGS. 1 to 6. FIG. 1 shows an overall configuration of a container refrigeration system according to the first embodiment. In the first embodiment, the container refrigeration system includes an electricity generating unit 20 and a refrigeration device 10. FIG. 2 shows an outline of a vehicle and FIG. 3 shows a configuration of a refrigeration cycle of the refrigeration device 10.

As shown in FIG. 3, the refrigeration device 10 in the present embodiment includes an electric compressor 12, a condenser 13, an evaporator 15, a condenser fan 16, and an evaporator fan 17. The condenser fan 16 is driven by a DC output from a DC power supply device 230 and blows air to the condenser 13. The evaporator fan 17 is driven by the DC output from the DC power supply device 230 and blows air to the evaporator 15. A controller 30 controls the electric compressor 12, the condenser fan 16, and the evaporator fan 17.

As shown in FIG. 1, electric power generated by the electricity generating unit 20 is supplied to the refrigeration device 10 that cools an interior of the container 100. The electricity generating unit 20 is driven by an engine 21 (also referred to as "sub engine") which is different from an engine for traveling and serving as a drive source for the vehicle.

As shown in FIG. 2, the refrigeration device 10 is used for the vehicle that transports frozen food, fresh food, and the like by land. The vehicle that is also referred to as "refrigerated vehicle" is formed by detachably connecting a driving vehicle (also referred to as "trailer head") 10h provided with a cabin and an engine for traveling (not shown) and a trailer 10t provided with the container 100. The refrigeration device 10 and the electricity generating unit 20 are integrally formed and mounted to a front side of the container 100. The trailer 10t is towed by the driving vehicle 10h.

As shown in FIG. 3, the refrigeration device 10 includes a refrigerant circuit 11 formed as a closed circuit. The refrigerant circuit 11 is formed by connecting the fixed capacity electric compressor 12, the condenser (i.e., a condensing device) 13, an electronic expansion valve 14, and the evaporator (i.e., an evaporation device) 15 in order in a loop shape via refrigerant piping. The condenser fan 16 is provided to be adjacent to the condenser 13 and the evaporator fan 17 is provided to be adjacent to the evaporator 15. Refrigerant from the electric compressor 12 flows through the condenser 13 and radiates heat to outside air.

The electric compressor 12 is the scroll compressor. The condenser fan 16 takes air (i.e., outside air) outside the container 100 into the condenser 13. The evaporator fan 17 takes air (i.e., inside air) inside the container 100 into the evaporator 15.

The refrigerant circuit 11, in which refrigerant circulates, configures a vapor compression refrigeration cycle. In other words, the refrigerant discharged from the electric compressor 12 is condensed in the condenser 13 by exchanging heat with the outside air, a pressure of the refrigerant is reduced in the electronic expansion valve 14, and the refrigerant is evaporated in the evaporator 15 by exchanging heat with the inside air, in the refrigerant circuit 11. As a result, the inside air is cooled.

By controlling a rotation speed of the electric compressor 12 by use of an inverter device 24 for driving a motor, an amount of refrigerant discharged from the electric compressor 12 is adjusted. The inverter device 24 may be the inverter device for the electric compressor 12 and belong to the electric compressor 12.

As shown in FIG. 1, the electricity generating unit 20 supplies two kinds of independent outputs, i.e., the 12V-class DC output and the three-phase 400V-class AC output to the refrigeration device 10 to drive the refrigeration device 10. The electricity generating unit 20 includes the engine 21 for generating electricity, which is also referred to as the sub engine, a power generator 22, a battery 23, and an alternator 24b. The battery 23 is necessary also to start the engine 21.

The DC power supply device 230 powered by the engine 21 to generate the DC output includes the alternator 24b driven by the engine 21 and the battery 23.

The power generator 22 is mechanically connected to the engine 21. The power generator 22 is powered by the engine 21 to generate the three-phase AC output. The engine 21 is provided separately from the engine for traveling of the driving vehicle and especially for generating electricity. In the engine 21, a fuel supply amount is adjusted by adjusting an opening degree of a throttle. In this way, an operating rotation speed of the engine 21 is controlled.

The battery 23 is electrically connected to the alternator 24b. The battery 23 is charged with the direct current generated by the alternator 24b and stores the current.

The inverter device 24 is electrically connected to a three-phase output terminal of the power generator 22. The inverter device 24 converts the three-phase output, which is input from the power generator 22, into DC and then converts the DC into an AC output for driving a DC brushless motor 24m. The inverter device 24 outputs the AC output for driving the DC brushless motor 24m to the DC brushless motor 24m of the above-described electric compressor 12. Although the DC brushless motor does not have a commutator and is driven by the AC, the motor has characteristics of a DC motor and is highly efficient.

In the electricity generating unit 20, a starter 21 a, a stop solenoid 21 b, and a throttle control rod 21c are provided. The starter 21a starts the engine 21. The stop solenoid 21b cuts off fuel supply to the engine 21 (fuel cutoff). The throttle control rod 21c controls the throttle of the engine 21.

Electric power of the battery 23 is supplied to a DC fan motor forming a condenser motor 10a via a contactor 23a for the condenser motor 10a. The electric power rotates the condenser fan 16. The electric power from the battery 23 is supplied to a DC fan motor forming an evaporator fan motor 10b via a contactor 23b for the evaporator fan motor 10b to rotate the evaporator fan 17.

The three-phase 400V voltage generated by the power generator 22 is supplied also to an electric heater 10c via a heater contactor 23c. The electric heater 10c is formed by connecting a plurality of heaters in a delta connection. When an electromagnetic switch forming the heater contactor 23c is opened, the electric heater 10c generates heat to adjust a temperature in the container 100 and perform defrosting when the interior of the container 100 is frosted.

An ECU configuring the controller 30 performs a control of the contactors 23a, 23b, and 23c configured by the electromagnetic switches, a control of the inverter device 24, and a control of the engine 21. For example, the throttle control rod 21c is controlled by commands from the controller 30, and thereby the rotation speed of the engine 21 is controlled.

A DC output from the battery 23 is input to the controller 30. A rotation speed controller in the controller 30 drives the engine 21 at a computed rotation speed. For this purpose, the rotation speed controller adjusts the opening of the throttle of the engine 21 with the throttle control rod 21 c to thereby adjust the fuel supply amount to the engine 21.

In the present embodiment, the output from the inverter device 24 is regarded as a refrigeration load on the refrigeration device 10. The inverter device 24 converts the three-phase 400V AC voltage and applies the voltage to the DC brushless motor 24m of the electric compressor 12 to control a speed of the electric compressor 12 using the DC brushless motor 24m in a range of about 12 rps to 100 rps. As a result, the controller 30 controls a flow rate of the refrigerant discharged from the electric compressor 12, based on magnitude of the refrigeration load on the refrigeration device 10. When it is determined that a load on the engine 21 for electricity generation is abnormal, the controller 30 reduces the output from the inverter device 24.

Next, operation of the electricity generating unit 20 will be described. First, when the engine 21 for electricity generation is driven, the power from the engine 21 allows the power generator 22 and the alternator 24b to generate electricity. The DC output generated by the alternator 24b is stored in the battery 23. The AC voltage output by the power generator 22 is the three-phase 400V voltage. In the inverter device 24, the AC output from the power generator 22 is converted into the electric power for driving the DC brushless motor and output to the electric compressor 12.

In the refrigeration device 10, by opening the electromagnetic switches of the contactor 23a for the condenser motor 10a and the contactor 23b for the evaporator fan motor 10b, DC outputs are output to the condenser fan 16 and the evaporator fan 17. As a result, the electric compressor 12 and the fans 16 and 17 are driven and the vapor compression refrigeration cycle is actuated in the refrigerant circuit 11.

The AC output from the power generator 22 is supplied to a contactor 23d for the electric compressor 12. The DC outputs from the alternator 24b are supplied to the controller (ECU) 30 and the contactor 23b for the evaporator fan motor 10b and the contactor 23a for the condenser motor 10a via the battery 23.

The controller 30 compares a set temperature and a temperature in the container 100 and opens or closes (turns on or off) the contactor 23d for the electric compressor 12, the contactor 23a for the condenser motor 10a, and the contactor 23b for the evaporator fan motor 10b.

In this way, the inverter device 24, the electric compressor 12, the condenser fan 16, and the evaporator fan 17 are actuated to maintain the interior temperature in the container at a target temperature. The electricity generating unit 20 formed by the engine 21, the power generator 22, the alternator 24b, and the battery 23 is controlled based on control signals from the controller 30 mainly via the starter 21 a, the stop solenoid 21 b, and the throttle control rod 21 c.

The evaporator fan 17 has a function of circulating air blown into the container 100, and therefore the evaporator fan motor 10b for driving the evaporator fan 17 needs to be controlled separately from the refrigeration load on the electric compressor 12. Therefore, the evaporator fan motor 10b is controlled by electric power supplied not from the power generator 22 but from the battery 23.

Conventionally, the rotation speed of the engine during low-speed operation can be reduced only to about 1500 rmp (corresponding to 50 Hz). In the present embodiment, on the other hand, the inverter device 24 in the refrigeration device 10 is utilized and therefore an inverter for supplying electric power to the entire refrigeration device is unnecessary. It is possible to widely control the rotation speed of the engine 21 according to the refrigeration load on the electric compressor 12. In this way, it is possible to reduce the rotation speed of the engine to be lower than or equal to 1500 rpm during the low-speed operation.

Therefore, when the refrigeration load is small, it is possible to further reduce fuel consumption by the engine 21 and, at the same time, it is possible to reduce noise from the engine.

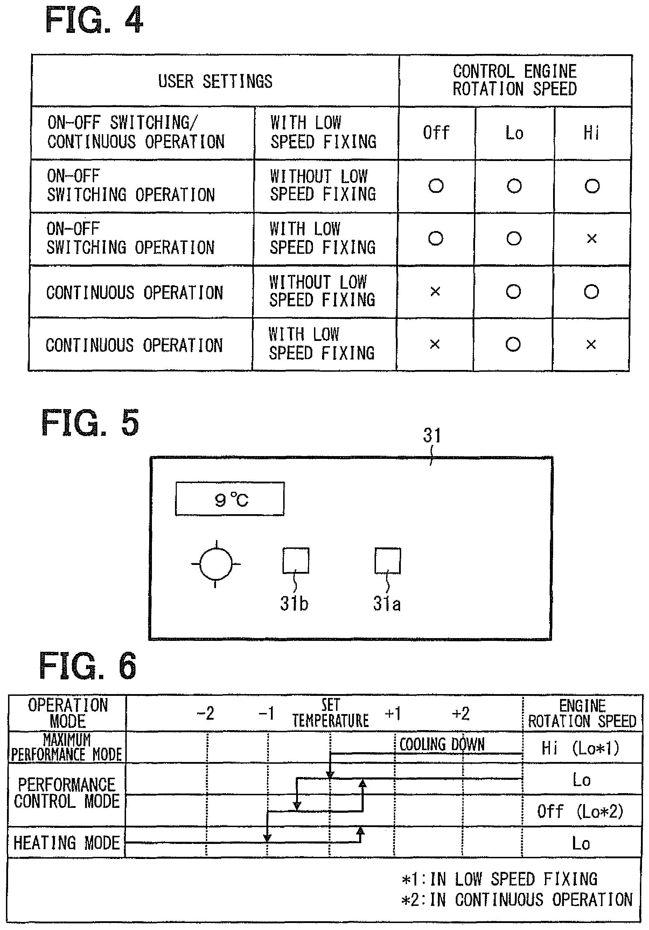

FIG. 4 is a table showing restrictions on the rotation speed of the engine 21 in respective settings (user settings) set by a user (e.g., a driver) by use of operation signals from a control panel 31. The control panel 31 is disposed in the refrigeration device 10. FIG. 5 is a schematic diagram of the control panel 31.

As shown in FIG. 4, the rotation speed of the engine 21 is restricted according to the user setting. Low speed fixing is a control that is set by a low speed fixing command section 31 a in the control panel 31 to fix the rotation speed of the engine 21 to a low speed. The low speed fixing command section 31a is formed by a push button switch and operated by the user.

The low speed fixing is used when the refrigerated vehicle travels urban areas and residential areas in which noise may become concerns. The noise can be reduced by reducing the engine rotation speed to be lower than 1500 rpm (e.g., 1200 rpm). The engine can be turned off (i.e., stopped) when an operation of the engine becomes unnecessary due to the refrigerator control in an ON/OFF switching operation mode of the user settings.

In a case where the user setting is set to a continuous (continuous rotation) operation mode, the engine is not stopped, and an operating state (ON state) is maintained, even when the engine rotation becomes unnecessary due to the refrigerator control. The continuous operation mode is set in order to stop vibrations generated by switching on and off of the engine, for example. The ON/OFF switching operation mode is set by the user by use of a push button switch forming a continuous operation command section 31 b shown in FIG. 5.

FIG. 6 is a control chart showing a relationship between temperature control of the refrigeration device 10 and control of the engine 21. In FIG. 6, the control of the engine 21 is performed in cooperation with the control of the refrigeration device 10. In the control of the refrigeration device 10, when a temperature in the container is high, the interior of the container 100 is first cooled down in a maximum performance mode. The electric compressor 12 operates at a highest rotation speed in the maximum performance mode, and thus the engine 21 operates at a high speed (high rotation speed) (Hi) in principle. When the low speed fixing is commanded, the engine 21 operates at a low speed (low rotation speed) (low). In this way, the inverter device 24 sets the rotation speed of the electric compressor 12 to a highest rotation speed within the output from the engine 21 to thereby prevent engine stall.

When the interior temperature in the container reaches a set temperature by the cooling down, the operation mode shifts into a performance control mode in which the interior temperature in the container is controlled only by a rotation speed adjusting control of the electric compressor 12 by the inverter device 24. The engine 21 operates at the low speed since the electric compressor 12 operates at the low rotation speed. At this time, the fuel consumption of the engine 21 reduces, and the noise reduces as well, by reducing the engine rotation speed to be lower than 1500 rpm.

When the interior temperature in the container further reduces for any cause in the performance control mode, the electric compressor 12 is turned off (stopped), and the engine 21 is stopped as well in principle. However, the rotation speed of the engine is maintained at the low rotation speed in the continuous operation mode. A heating mode is set when the interior temperature further falls, and the electric heater 10c is energized.

Next, the evaporator fan 17 that circulates the air in the container 100 is driven by the different power supply from the electric compressor 12 and the electric heater 10c. Therefore, the evaporator fan 17 can be operated regardless of the rotation speed of the engine 21, even when the engine 21 is stopped. As a result, air in the container 100 does not stagnate and it is possible to homogenize the interior temperature in the container. To stop the electric compressor 12, the inverter device 24 can be controlled or the contactor 23d for the electric compressor 12 can be shut off.

Operation and effect of the above-described first embodiment can be summarized as follows. The refrigeration device in the above-described first embodiment includes the inverter device 24 and the electric compressor 12. The AC output from the power generator 22 driven by the engine 21 is supplied to the inverter device. The amount of refrigerant discharged from the electric compressor 12 is controlled by the inverter device 24. In this way, the rotation speed of the electric compressor 12 can be changed in a wide range. In this case, the inverter device 24 can be used instead of providing an inverter for converting electric power supplied to the entire refrigeration device 10. Moreover, the condenser fan 16 and the evaporator fan 17 can be operated regardless of frequency and voltage of the AC output supplied from the power generator 22.

The refrigeration device has the controller 30 and the control panel 31 that supplies command signals to the controller 30. In the control panel 31, the push button switch forming the low speed fixing command section 31a that fixes the rotation speed of the engine 21 to the low speed is provided as shown in FIG. 5.

The rotation speed of the engine 21 is fixed to the low speed by the operation signal from the control panel 31. Accordingly, the engine can be operated while reducing the noise caused to surroundings. Then, the refrigeration device has the electric compressor 12 of which refrigerant discharge amount is controlled by the inverter device 24, to which the AC output from the power generator 22 is supplied, even when the rotation speed of the engine 21 is reduced to the low speed. Therefore, the rotation speed of the electric compressor 12 can be controlled in the wide range.

The container refrigeration system has the DC power supply device 230 that is powered by the engine 21 to generate the DC output, and the condenser fan 16 and the evaporator fan 17 can be driven by the DC output. Therefore, it is possible to drive the condenser fan 16 and the evaporator fan 17 at the high rotation speeds, even when the rotation speed of the engine 21 is fixed to the low speed.

Next, the refrigeration device has the control panel 31 and the control panel 31 has the push button switch forming the continuous operation command section 31 b that does not allow turning off (a stop) of the engine and operates the engine continuously as shown in FIG. 5.

Accordingly, the engine 21 can be put into the continuous operation mode to achieve the operation in which the vibrations caused by switching on and off of the engine 21 are suppressed. The condenser fan 16 and the evaporator fan 17 in the present embodiment are driven by the DC power supply device 230. Therefore, in each of the ON-OFF switching operation mode and the continuous operation mode, the condenser fan 16 and the evaporator fan 17 can be controlled regardless of a state of the engine 21 and the frequency and the voltage of the AC output supplied to the inverter device 24.

Next, the refrigeration device 10 has the electric heater 10c that is heated by the AC output from the power generator 22 and that heats the interior of the container 100. Accordingly, the electric heater 10c, which is heated by the AC output from the power generator 22, can be energized to defrost the interior of the container 100, and thereby the interior temperature can be controlled appropriately.

Next, as shown in FIG. 6, when the electric compressor 12 is operated in the maximum performance mode, the controller 30 in the refrigeration device operates the engine 21 at the high speed (high rotation speed) or the low speed (low rotation speed). When the electric compressor 12 is operated in the performance control mode, the engine 21 is operated at the low rotation speed. The engine 21 is stopped (turned off) or operated at the low rotation speed in a case that the interior temperature at the set temperature falls to be lower than or equal to a specified temperature while the electric compressor 12 is operated in the performance control mode by the inverter device 24. In addition, it is possible to energize the electric heater 10c to perform the heating mode.

Accordingly, the noise of the engine is reduced, and the speed of the electric compressor 12 is controlled by the inverter device 24, such that the interior temperature can be controlled when the interior temperature is within specified ranged on a high-temperature side and a low-temperature side of the set temperature respectively. The electric compressor 12 can be driven with high performance in a manner that the engine 21 is operated at the high rotation speed to supply the sufficient AC output to the inverter device 24, when the noise caused to the surroundings can be ignored in the maximum performance mode.

The engine 21 is turned off (stopped) or operated at the low rotation speed when the interior temperature at the set temperature falls toward a low temperature side by a specified degree or more. In this case again, the condenser fan 16 and the evaporator fan 17 can be operated at sufficiently high rotation speeds regardless of the frequency and the voltage of the AC output supplied to the inverter device 24.

The container refrigeration system according to the above-described first embodiment includes the refrigeration device 10 and the electricity generating unit 20 that supplies the electric power to the refrigeration device 10.

The electricity generating unit 20 includes the DC power supply device 230 that is powered by the engine 21 to generate the DC output. The DC power supply device 230 has the alternator 24b that is driven by the power from the engine and the battery 23 that is charged by the alternator 24b. Therefore, according to the container refrigeration system having the refrigeration device 10 according to the present embodiment, it is possible to supply the stable DC low voltage to the controller 30, the condenser fan 16, and the evaporator fan 17 via the battery 23.

### (Second Embodiment)

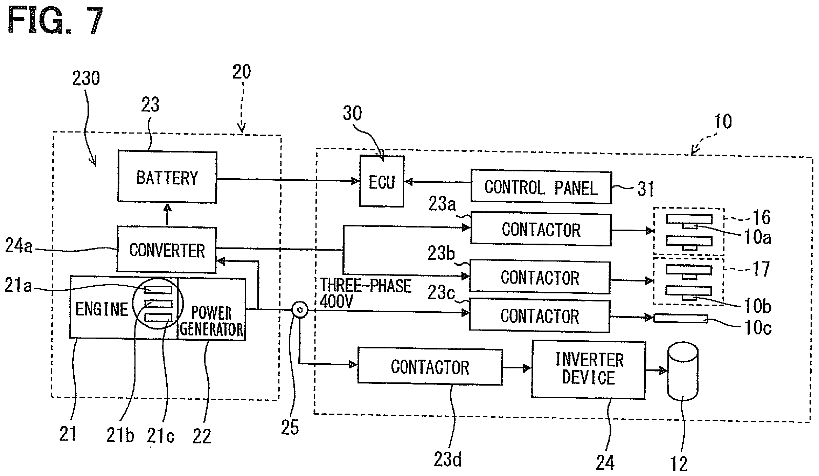

Next, a second embodiment of the present disclosure will be described with reference to FIG. 7.

In FIG. 7, a power generator 22 that is driven by an engine 21 outputs three-phase 400V AC voltage. The AC voltage output by the power generator 22 is led to an AC-DC converter (simply referred to as "converter" as well) 24a. The converter 24a in place of the alternator 24b in FIG. 1 outputs 12V DC voltage to charge a battery 23. The 12V DC voltage output from the battery 23 is led to the controller 30. The 12V DC voltage is led to a condenser motor 10a and an evaporator fan motor 10b for driving a condenser fan 16 and an evaporator fan 17 via a contactor 23a for the condenser motor 10a and a contactor 23b for the evaporator fan motor 10b, respectively.

A DC power supply device 230 that is powered by the engine 21 to generate a DC output includes the converter 24a and the battery 23. The three-phase 400V AC voltage output by the power generator is converted into arbitrary voltage and frequency by an inverter device 24 to drive a DC brushless motor 24m of an electric compressor 12 at a target rotation speed. Since the DC brushless motor is used, a speed of the motor can be control in a wider range as compared with the prior-art induction motor and the efficient electric compressor 12 can be obtained.

Since the electric compressor 12 is the fixed capacity compressor, the higher the rotation speed, the more refrigerant is discharged and the higher refrigeration performance becomes. A variable capacity compressor can be used as well. In this case, a capacity of a compressor and actuation of an inverter device 24 are controlled based on control signals from a controller 30.

In a standby mode in which a trailer is in a non-traveling state and the electric compressor 12 is driven by electric power from a commercial power supply, three-phase 400V voltage from the commercial power supply is supplied to a connection terminal 25 forming a power supply plug. In this case, the converter 24a charges the battery by using the commercial power supply and the battery supplies electricity to the inverter device 24.

In the second embodiment, the DC power supply device 230 has the AC-DC converter 24a that converts the AC output from the power generator 22 into a DC output. The connection terminal 25 is provided on the output side of the power generator 22 and the electric power from the commercial power supply is supplied to the DC power supply device 230 via the connection terminal 25.

In this way, even in the standby mode in which the external commercial power supply in place of the power generator 22 drives the electric compressor 12, the DC power supply device 230 having the converter 24a can generate the DC output by use of the commercial power supply.

### (Other Modifications)

While the present disclosure has been described with reference to preferred embodiments thereof, it is to be understood that the disclosure is not limited to the preferred embodiments and constructions. The present disclosure is intended to cover various modification and equivalent arrangements within a scope of the present disclosure. It should be understood that structures described in the above-described embodiments are preferred structures, and the present disclosure is not limited to have the preferred structures. The present disclosure is intended to cover various modifications and equivalent arrangements within the scope of the present disclosure.

Although the container refrigeration system mounted to the trailer has been described in each of the above-described embodiments, the container refrigeration system may be mounted to a truck. It is needless say that the container refrigeration system in each of the above-described embodiments can be used for a container used domestically, though the refrigeration system is advantageous to a long North American container.

In each of the above-described embodiments, the amount of refrigerant discharged from the electric compressor 12 is controlled by the rotation speed of the DC brushless motor 24m driven by the inverter device 24. However, a variable capacity compressor may be used and a capacity control may be performed as well.

## Claims

1. A refrigeration device that cools an interior of a container (100), the refrigeration device comprising:
an inverter device (24) to which an AC output from a power generator (22) driven by an engine (21) is supplied, the inverter device that is used for driving a motor;
an electric compressor (12), a refrigerant discharge amount of which is controlled by the inverter device (24);
a condenser (13) in which the refrigerant from the electric compressor (12) flows, the condenser that causes the refrigerant to radiate heat to outside air outside the container (100);
an evaporator (15) in which the refrigerant from the condenser (13) flows, the evaporator that cools the interior of the container (100);
a condenser fan (16) that is driven by a DC output from a DC power supply device (230) and blows air to the condenser (13);
an evaporator fan (17) that is driven by the DC output from the DC power supply device (230) and blows air to the evaporator (15); and
a controller (30) that controls at least the electric compressor (12), the inverter device (24), and the engine (21).

2. The refrigeration device according to claim 1, further comprising
a control panel (31) that sends a command signal to the controller (30), wherein
the control panel (31) has a low speed fixing command section (31a) that fixes a rotation speed of the engine (21) to a low speed.

3. The refrigeration device according to claim 1 or 2, further comprising
a control panel (31) that sends a command signal to the controller (30), wherein
the control panel (31) includes a continuous operation command section (31b) that prohibits the engine (21) from stopping and operates the engine to rotate continuously.

4. The refrigeration device according to any one of claims 1 to 3, further comprising
an electric heater (10c) that is heated by the AC output from the power generator (22) and heats the interior of the container (100).

5. The refrigeration device according to claim 4, wherein
the controller (30)
operates the engine (21) at a high rotation speed in a maximum performance mode in which a rotation speed of the electric compressor (12) is maximized,
operates the engine (21) at a low rotation speed and controls a performance of the electric compressor (12) by the inverter device (24), in a performance control mode in which the electric compressor (12) is operated at a low rotation speed, and
stops the engine (21) and energizes the electric heater (10c) to set a heating mode, when a temperature in the container (100) becomes lower than or equal to a specified temperature in the performance control mode.

6. A container refrigeration system comprising:
a refrigeration device (10) that cools an interior of a container (100); and
an electricity generating unit (20) that supplies electric power to the refrigeration device (10), wherein
the electricity generating unit (20) has
an engine (21),
a power generator (22) that is driven by the engine (21) to output an AC output, and
a DC power supply device (230) that converts power of the engine (21) into electric power to generate a DC output, and
the refrigeration device (10) has
an inverter device (24) to which the AC output from the power generator (22) is supplied, the inverter device that is used for driving a motor,
an electric compressor (12), a refrigerant discharge amount of which is controlled by the inverter device (24),
a condenser (13) in which the refrigerant from the electric compressor (12) flows, the condenser that causes the refrigerant to radiate heat to outside air outside the container (100),
an evaporator (15) in which the refrigerant from the condenser (13) flows, the evaporator that cools the interior of the container (100),
a condenser fan (16) that is driven by the DC output from the DC power supply device (230) and blows air to the condenser (13),
an evaporator fan (17) that is driven by the DC output from the DC power supply device (230) and blows air to the evaporator (15), and
a controller (30) that controls at least the electric compressor (12), the inverter device (24), and the engine (21).

7. The container refrigeration system according to claim 6, wherein
the DC power supply device (230) has
an alternator (24b) that is driven by the power of the engine (21) and
a battery (23) that is charged by the alternator (24b).

8. The container refrigeration system according to claim 6, wherein
the DC power supply device (230) has
a converter (24a) that converts the AC output from the power generator (22) into the DC output, and
a connection terminal (25) which is provided on an output side of the power generator (22) and to which electric power from a commercial power supply is supplied, and
the converter (24a) converts the electric power supplied from the commercial power supply into the DC output via the connection terminal (25).

9. The container refrigeration system according to any one of claims 6 to 8, further comprising
a control panel (31) that sends a command signal to the controller (30), wherein
the control panel (31) has a low speed fixing command section (31a) that fixes a rotation speed of the engine (21) to a low speed.

10. The container refrigeration system according to any one of claims 6 to 9, further comprising
a control panel (31) that sends a command signal to the controller (30), wherein
the control panel (31) includes a continuous operation command section (31b) that prohibits the engine (21) from stopping and operates the engine (21) to rotate continuously.

11. The container refrigeration system according to any one of claims 6 to 10, further comprising
an electric heater (10c) that is heated by the AC output from the power generator (22) and heats the interior of the container (100).

12. The container refrigeration system according to claim 11, wherein
the controller (30)
operates the engine (21) at a high rotation speed in a maximum performance mode in which a rotation speed of the electric compressor 12 is maximized,
operates the engine (21) at a low rotation speed and controls a performance of the electric compressor (12) by the inverter device (24), in a performance control mode in which the electric compressor (12) is operated at a low rotation speed, and
stops the engine (21) and energizes the electric heater (10c) to set a heating mode, when an interior temperature in the container (100) becomes lower than or equal to a specified temperature in the performance control mode.

13. The container refrigeration system according to any one of claims 6 to 12, wherein
the electric compressor (12) is driven by a DC brushless motor, a speed of the DC brushless motor is controlled by the inverter device (24).
